# EUROPEAN PATENT SPECIFICATION

(11) **EP 2 915 311 B1**
(45) Date of publication and mention of the grant of the patent: **16.11.2016**
(21) Application number: 13709640.0
(22) Date of filing: 25.02.2013
(51) Int. Cl.: H04L 12/24, G06F 3/0481, G06F 3/0484, H04L 29/08

(54) **APPARATUS AND METHOD OF CONTENT CONTAINMENT**
VORRICHTUNG UND VERFAHREN ZUR INHALTSBEGRENZUNG
APPAREIL ET PROCÉDÉ DE CONFINEMENT DE CONTENU

(30) Priority: 02.11.2012 US 201261721641 P
(43) Date of publication of application: 09.09.2015
(73) Proprietor: GE Intelligent Platforms, Inc., Charlottesville, VA 22911 (US)
(72) Inventor: HARDWICK, Peter, Charlottesville, VA 22911 (US); MOLDEN, Robert, Charlottesville, VA 22911 (US)
(74) Representative: Cleary, Fidelma
(86) International application number: PCT/US2013/027571
(87) International publication number: WO 2014/070223

(56) References cited:
- US-A1- 2012 173 981
- US-A1- 2012 260 161

## Description

### Background of the Invention

### Field of the Invention

The subject matter disclosed herein relates to organizing and storing content within an application.

### Brief Description of the Related Art

Mobile application, or "app" development is still a relatively immature technical field. More specifically, platforms are varied and have changed very frequently. This platform volatility also means that the applications that are supported by the platforms are volatile as well.

Most internet websites have their own apps that do little more than mirror the website. In many situations, multiple and separate apps are deployed, where each of the apps performs only a small amount of functionality. Thus, these approaches are often wasteful of system resources.

As for mobile applications, the prevailing approach is the creation of a separate application for each individual piece of functionality. However, this is also wasteful of system resources.

Domain experts also exist and they frequently fully understand their domain. Consequently, these domain experts are capable of providing new content that makes use of their domain knowledge and existing context sensitive information as well as the context from their domain. Unfortunately, these domain experts spend unnecessary time learning, building, compiling, and deploying entire applications. Further, most applications provide for no interoperability across to other apps even when the applications are from the same author.

Unfortunately, these shortcomings have mostly gone unaddressed in previous systems and user inconvenience and dissatisfaction has resulted with respect to these previous approaches.

The document US2012/0260161 discloses a user interface which is configured to present a plurality of user-selectable icons. The user-selectable icons are presented in a digital container wherein the container is configured to display contents of the container within a defined area on the user interface such as a Web page.

### Brief description of the Invention

Approaches for content containment within a mobile or web application are provided. More specifically, many embodiments described herein provide a single wrapper application that includes a content container with device interface, context sharing, and interoperability interface.

In one approach for content containment within a mobile or web application, a container encapsulates all content. By "encapsulate," it is meant that all program logic, visualization components, and functionality needed to support visualizations resides within the application that hosts the container. This approach still allows for server-side components to provide necessary functionality to content, but the visualization and background application level logic or functionality resides in the application itself (e.g., an application that resides on a mobile device).

These approaches also support dynamic hosting of content, which allows for visualization components and logic to exist outside of the application either on a server or elsewhere in a cloud computing environment. In this case, availability of new content is discovered via queries through existing server-side functionality and the necessary content components may be streamed into the application container and loaded when needed.

In some approaches, the container provides for general features required by content as well as navigability within an application. In other approaches, the container provides necessary mechanisms to contain any type of desired content.

Content containment may be provided within a mobile or web application and can provide for the ability to distribute and demonstrate a single main application. Additionally, approaches allow users to decide whether the wish to provide custom content and protect the content by making it accessible only from a particular computer system. Additionally, different applications, content, and visualizations, can share information such as state information.

In many of these embodiments, a first user content request from a first visualization and a second user content request from a second visualization are received. The first user content request and the second user content request are analyzed. Based upon the analysis, access is provided to a set of common functions to the first user content request and to the second user content request. State information is also shared between the first visualization and the second visualization.

In other aspects, a selected one of the set of common functions includes sizing graphical display icons. The selected one of the set of common functions may additionally include the graphical display icons on a status bar of the user content.

In yet other aspects, a selected one of the set of common functions includes security-related functions. In other aspects, the selected one of the set of common functions comprises logging on to a server.

In still other examples, the state information includes dynamic information relating to an object or asset. In some other examples, the first visualization includes a web page.

In others of these embodiments, an apparatus for interfacing user content to actions includes an interface and a controller. The interface has an input and output and is configured to receive at the input a first user content request from a first visualization and a second user content request from a second visualization.

The controller is coupled to the interface. The controller is configured to analyze the first user content request and the second user content request. The controller is further configured to, based upon the analysis, provide access to a set of common functions to the first user content request and the second user content request. The controller is configured to share state information between the first visualization and the second visualization at the output.

### Brief description of the Drawings

For a more complete understanding of the disclosure, reference should be made to the following detailed description and accompanying drawings wherein:
FIG. 1 comprises a block diagram of a container-based system according to various embodiments of the present invention;
FIG. 2 comprises a flow chart of one example of operating a container-based system according to various embodiments of the present invention;
FIG. 3 comprises a flow chart of another example of operating a container-based system according to various according to various embodiments of the present invention;
FIG. 4 comprises a flowchart showing the operation of a container according to various embodiments of the present invention;
FIG. 5 comprises a block diagram of an apparatus for providing access to common functionality and the sharing of information between visualizations according to various embodiments of the present invention.

Skilled artisans will appreciate that elements in the figures are illustrated for simplicity and clarity. It will further be appreciated that certain actions and/or steps may be described or depicted in a particular order of occurrence while those skilled in the art will understand that such specificity with respect to sequence is not actually required. It will also be understood that the terms and expressions used herein have the ordinary meaning as is accorded to such terms and expressions with respect to their corresponding respective areas of inquiry and study except where specific meanings have otherwise been set forth herein.

### Detailed Description of the Invention

A single wrapper application that includes a content container with a device interface, context sharing, and interoperability interfaces is provided. The approaches provided herein eliminate or substantially reduce unneeded operations and free the domain experts to provide content that will run inside or be supported by the container. Interoperability is easily enabled through the container allowing new content to inter operate with existing content, and existing content to inter operate with content that had not yet been implemented at the time of its creation.

In one example, a system is provided that includes a single container, which serves to encapsulate all content. The container provides for several general features required by content such as access to common context sensitive information; device, session, and hardware information; and user, application, and system context information. The container additionally provides for a complete set of navigability within an application and access to providing the availability of custom and dynamic actions based on context. Finally, the container provides all the mechanisms necessary to contain any type of content desired to provide additional visualizations and/or functionality to an application. Content includes any visualization component or components combined with both background functionality as well as server-side components necessary to provide for either extensions to existing content or additional distinctly different content.

In these respects, the container acts as a top level master mechanism for providing access to common functionality, allowing for information and context sharing as well as providing for the necessary functionality needed to contain, host, and cause to be executed and displayed those components referred to as content.

Static hosting of content is accomplished by including all program logic, visualization components, and functionality within the application that hosts the container itself. This approach still allows for server-side component to provide necessary functionality to content, but the visualization and background application level logic resides in the application itself (e.g., an application that resides on a mobile device).

In addition, dynamic hosting of content is provided and allows for visualization components and logic to exist outside of the application either on a server or elsewhere in a cloud computing environment. Availability of new content is discovered via queries through existing server-side functionality and the necessary content components would be streamed into the application container and loaded when needed.

When all content is being hosted (encapsulated) within a container, this creates a common access point for which context sensitive information can be stored and shared. Additionally, via provision of specific access mechanisms program, data flow can be controlled and made common. For mobile applications, where network traffic, both frequency and size, may be an issue, the container can be made the controller of network requests, notifying content when data needs to be updated or refreshed and controlling key properties that affect sized of data retrievals such as time ranges and data set sizes and maximum sizes.

Common program flow and shared context can be used via shared navigation context. If a set of context sensitive information is modified by a given piece of content, upon switching to other content the container can be made to provide this updated set of contextual information to the newly loaded content thus ensuring common program flow and ease of use.

Additionally, provision of a high level container provides for an ideal location to manage specific implementations of functionality such as dynamic actions. These dynamic actions could also have been implemented by some other root level type singleton object in the absence of the container. However, in the presence of the container and with all content already having access and understanding of a container, the concepts from the actions system can easily be incorporated here. This is also true of any future functionality or concepts which might span an entire system or multiple separate piece of content or functionality.

The approaches described herein substantially reduce (or eliminate) the amount of time and effort that domain experts need to configure content, thereby allowing them to provide content within their domain expertise. Another advantage to the approaches described herein is the ability to distribute and demonstrate a single main application. Specific content available within the application can be added at various times and can even be individually licensed. Customers will not have to struggle to determine which app to load. Instead, they will load a single application and navigate to the content in which they are interested.

Still another advantage of the present approaches relates to the advanced container functionality that seeks to allow dynamic streaming or loading of content off of a server or cloud based environment. Customers or system integrators can decide to provide custom content and protect by making it accessible only from a particular customer's server of only that particular integrator's cloud solution.

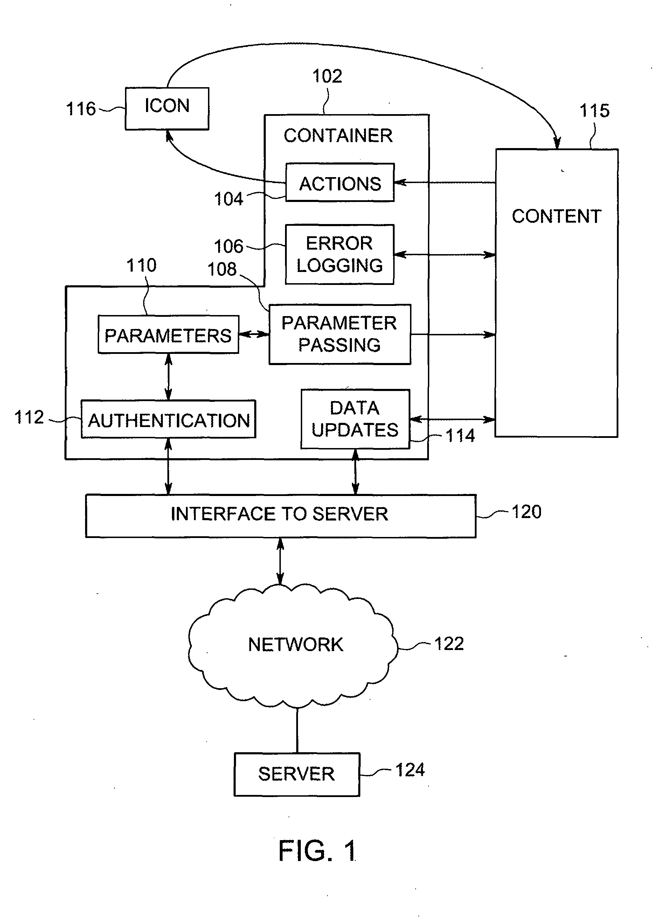

Referring now to FIG. 1, one example of a container 102 is described. The container 102 includes an actions module 104, an error logging module 106, a parameters passing module 108, parameters 110, an authentication module 112, and a data updates module 114.

The container 102 is disposed within a single application and this application may itself be disposed on a mobile device such as a cellular phone, personal computer, pager, or personal digital assistant. Other examples of mobile devices are possible. The container 102 is a common system level component that acts as a top level master mechanism for providing access to common functionality, allowing for information and context sharing between content (visualizations) as well as providing for the necessary functionality needed to contain, host, and cause to be executed and displayed those components referred to as content (or visualizations).

The actions module 104 receives user content 115 and processes that information. Various types of functions are supported. To take one example, the actions module 104 receives content or requests from the content, and determines an icon 116 that is to be placed on the action bar of the content 115. The content 115 is a visualization of information that is presented to a user, for example, displayed on a graphic display. The content 115 can be one piece of content but may also be broken into multiple content pieces. In this example, the actions module 104 determines a type of icon for display, correctly sizes the icon, and passes the icon back to the content. If multiple pieces of content exist, information (e.g., state information) can be shared between the multiple pieces of content.

The error logging module 106 receives the content and logs errors associated with the content 115. The parameters passing module 108 receives various parameters 110 and these can be passed between the content 115 and the server 124 (via the authentication module 112, the interface 120, and the network 122.

Parameters may be configured, initialized, or updated and this information may be passed to the content 115 either when the content is a single piece of content or to the individual pieces (fragments) of content when the content 115 includes multiple fragments. The parameters 110 are values that may be associated with the content 115. Examples of parameters include logged-in user, the server name, and permission/claims.

The authentication module 112 authenticates access between the content 115 and the server 124. In these regards, it verifies that the content can access the server 124 and uses any known security protocol to achieve this result.

The data updates module 114 allows data updates to be made between the content 115 and the server 124. Examples of data updates might include new information from the server 124 that is used to update the content 115.

It will be appreciated that the content 115 does not need to know the details of the operation of the modules within the container 102. Thus, the user can change content, add content, and share information without concern for implementation details all within a single application that can, for example, reside on a mobile device.

The container couples to an interface 120. The interface 120 is any combination of programmed software or hardware that allows communication between the network 122 and the container 102. The interface 120 couples to a network 122. The network 122 is any network such as the Internet, a cellular phone network, a data network, or any combinations of these networks. The network 122 couples to a server 124. The server 124 is any combination of programmed software or hardware that provides server or server-side functions as known to those skilled in the art.

Generally speaking, the container 102 (via the modules described above) provides functionality required by content such as access to common context sensitive information; device, session, and hardware information; and user, application, and system context information. The container 102 additionally provides for a complete set of navigability within an application and access to providing the availability of custom and dynamic actions based on context. Finally, the container 102 provides all the mechanisms necessary to contain any type of content 115 desired to provide additional visualizations and/or functionality to an application. In these regards, the content 115 is a visualization component or components combined with both background functionality as well as server-side components necessary to provide for either extensions to existing content or additional distinctly different content.

Static hosting of content 115 by the container 102 is accomplished by including all program logic, visualization components and functionality within the application that hosts the container 102. This approach still allows for any server-side component (e.g., server 124) to provide necessary functionality to the content 115, but the visualization and background application level logic resides in the application in which the container 102 resides.

Dynamic hosting of content by the container 102 allows for visualization components and logic to exist outside of the application either on the server 124 or elsewhere in a cloud computing environment (e.g., at the network 122). Availability of new content is discovered via queries through existing server-side functionality and the necessary content components would be streamed into the container 102 and loaded when needed.

When all content is being hosted within the container 102, this creates a common access point for which context sensitive information can be stored and shared amongst different content. Additionally, via provision of specific access mechanisms program and data flow can be controlled and made common. For mobile applications, where network traffic, both frequency and size, may be an issue, the container 102 can be made the controller of network requests notifying the content 115 when data needs to be updated or refreshed and controlling key properties that affect sized of data retrievals such as time ranges and data set sizes and maximum sizes.

Common program flow and shared context can also be used via shared navigation context. If a set of context sensitive information is modified by the content 115, upon switching to other content the content 115 can be made to provide this updated set of contextual information to the newly loaded content thus ensuring common program flow and ease of use.

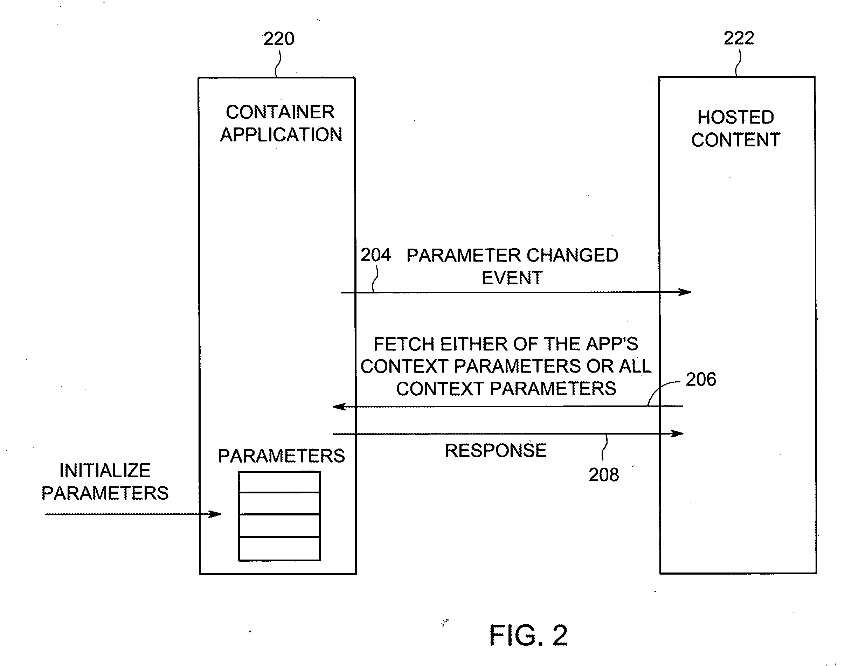

Referring now to FIG. 2, one example of passing and receiving contextual information between a container 220 and hosted content 222 is described. In this case, the container 220 communicates with the content 222. The content 222 may be any type of. visualization (e.g., a web page) that can be presented to a user on any type of display.

At step 202, a set of predefined parameters are sent to or initialized by the container 220. These parameters are a set of parameters provided by the container and will be available to all hosted contents and will be provided upon request. At step 204 a "parameter changed" message is sent from the container 220 to the content 222. At step 206, some or all of the applications context parameters are requested by the content 222 to be sent by the container 220. At step 208, a response is sent including the requested (changed) parameters.

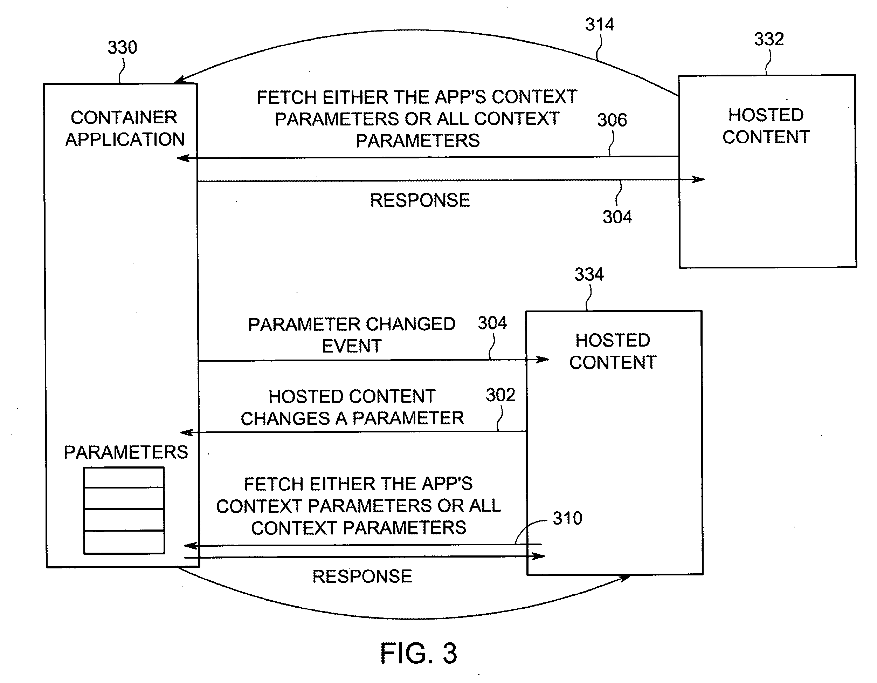

Referring now to FIG. 3, a scenario where multiple visual fragments (or content) are hosted and a parameter modified by one of the fragments is described. In this case, a container 320 communicates with a first visual fragment 322 and a second visual fragment 324. The fragments 332 and 334 may be any type of visualizations (e.g., portions of web pages) that can be presented to a user on any type of display.

In this case, the container 330 sends a "parameter changed" event message and both fragments 332 and 334 respond to this event. In this case, the fragment that modified the parameter also responds to the event. Alternatively, this fragment could simply ignore the event.

At step 302, the first hosted content changes a parameter. At steps 304, a "parameter change" message is sent that a parameter changed event occurs. This is sent from the container 330 to both fragments 332 and 334.

At step 306, a message is sent from the first fragment 332 either to fetch the application's content or all context parameters by the first fragment 332. At step 308, the requested information is sent to the first fragment 332.

At step 310, a request is made by the second fragment 334 to fetch the application's content or all context parameters. At step 312, the requested information is sent to the second fragment 334.

Various types of information can also be shared. For example, at step 314 state information is sent from the first fragment 332 to the container 330. At step 316, this state information is sent to the second fragment 334.

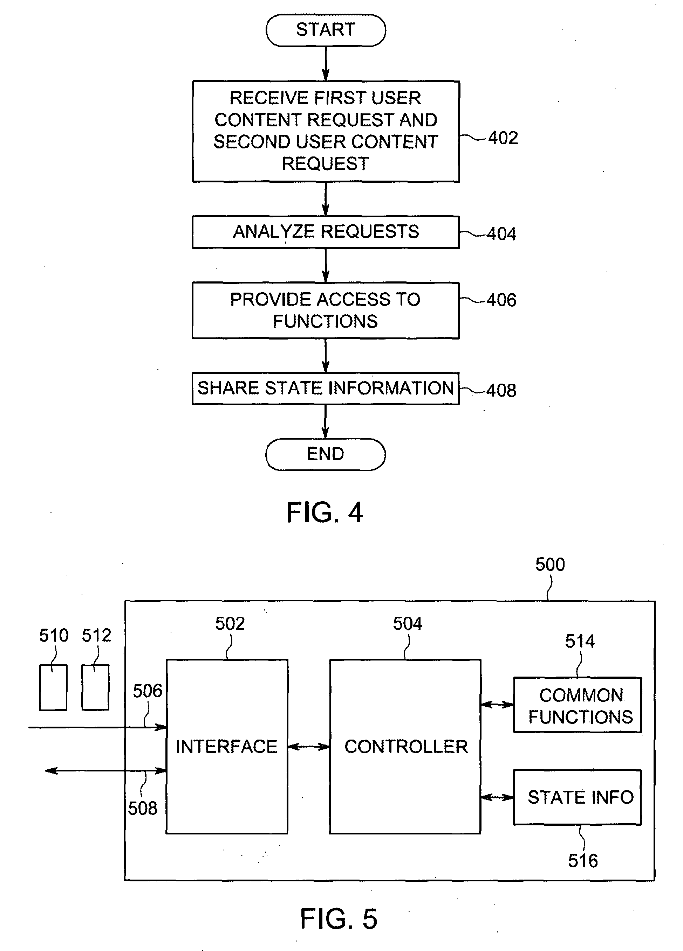

Referring now to FIG. 4, one example of an approach that allows content to share common functionality is described. At step 402, a first user content request from a first visualization (or fragment) and a second user content request from a second visualization (or fragment) are received. The visualizations are distinct pieces of content that may be displayed together (or may not be displayed together) in one example. The first user content request and the second user content request are analyzed at step 404. The analysis determines the nature of the request and the action needed.

At step 406 and based upon the analysis, access is provided to a set of common functions to the first user content request and the second user content request. The common set of functions is in a container and the detailed functionality for these actions is not seen by the different content. As such, both visualizations have access to these functions. Furthermore, as new visualizations are created, these visualizations also have access to and utilize this common functionality. At step 408, state information is shared between the first visualization and the second visualization. This state information may include dynamic information. To give some examples, state information may include current context (selected asset), key performance indicator (KPI), and alarm information (e.g., state, severity, or source) for items of interest. Other examples of state information are possible.

Referring now to FIG. 5, one example of an apparatus that provides common functionality and allows visualization fragments to share information is described. The apparatus 500 includes an interface 502 and a controller 504. The interface 502 has an input 506 and output 508 and is configured to receive at the input 506 a first user content request 510 from a first visualization and a second user content request 512 from a second visualization.

It will be understood that the apparatus 500 may be implemented as combinations of hardware and software. The apparatus 500 may be part of an application, for example, an application that resides on a mobile device, such as a cellular phone or a personal computer. Alternatively, the apparatus 500 may have its functionality split across different physical locations.

The controller 504 is coupled to the interface 502. The controller 504 is configured to analyze the first user content request 510 and the second user content request 512. The controller 504 is further configured to, based upon the analysis, provide access to a set of common functions 514 to the first user content request and the second user content request. The controller 504 is configured to share state information 516 between the first visualization and the second visualization at the output 508.

Preferred embodiments of this invention are described herein, including the best mode known to the inventors for carrying out the invention. It should be understood that the illustrated embodiments are exemplary only, and should not be taken as limiting the scope of the invention.

## Claims

1. A method (400) of interfacing user content to actions, the method comprising:
receiving (402) a first user content request (510) from a first visualization (332) and a second user content request (512) from a second visualization (334);
analyzing (404) the first user content request (510) and the second user content request (512);
based upon the analyzing, providing (406) access to a set of common functions (514) to the first user content request (510) and the second user content request (512);
the method being further **characterized by**:
sharing (408) state information (516) between the first visualization (332) and the second visualization (334).

2. The method of claim 1, wherein a selected one of the set of common functions (514) comprises sizing graphical display icons.

3. The method of claim 2, wherein the selected one of the set of common functions (514) further comprises placing the graphical display icons on a status bar.

4. The method of any of claims 1 to 3, wherein a selected one of the set of common functions (514) comprises security-related functions.

5. The method of any preceding claim, wherein the wherein the selected one of the set of common functions (514) comprises logging on to a server.

6. The method of any preceding claim, wherein the state information (516) comprises dynamic information relating to an object or asset.

7. The method of any preceding claim, wherein the first visualization (332) comprises a web page.

8. An apparatus of interfacing user content to actions, the apparatus comprising:
an interface (502) having an input (506) and output (508), the interface (502) configured to receive at the input a first user content request (510) from a first visualization (332) and a second user content request (512) from a second visualization (334);
a controller (504), the controller (504) being coupled to the interface (502), the controller (504) configured to analyze the first user content request (510) and the second user content request (512), the controller (504) further configured to, based upon the analyzing, provide access to a set of common functions (514) to the first user content request (510) and the second user content request (512), the apparatus being further **characterized by**: the controller (504) configured to share state information (516) between the first visualization (332) and the second visualization (334) at the output (508).

9. The apparatus of claim 8, wherein a selected one of the set of common functions (514) comprises sizing graphical display icons.

10. The apparatus of claim 9, wherein the selected one of the set of common functions (514) further comprises placing the graphical display icons on a status bar.

11. The apparatus of any of claims 8 to 10, wherein a selected one of the set of common functions (514) comprises security-related functions.

12. The apparatus of any of claims 8 to 11, wherein the wherein the selected one of the set of common functions (514) comprises logging on to a server via the output.

13. The apparatus of any of claims 8 to 12, wherein the state information (516) comprises dynamic information relating to an object or asset.

14. The apparatus of any of claims 8 to 13, wherein the first visualization (332) comprises a web page.

## Patentansprüche

1. Verfahren (400) zum Verknüpfen von Anwenderinhalt mit Aktionen, wobei das Verfahren Folgendes umfasst:
Empfangen (402) einer ersten Anwenderinhaltanfrage (510) von einer ersten Visualisierung (332) und einer zweiten Anwenderinhaltanfrage (512) von einer zweiten Visualisierung (334);
Analysieren (404) der ersten Anwenderinhaltanfrage (510) und der zweiten Anwenderinhaltanfrage (512);
basierend auf dem Analysieren, Bereitstellen (406) von Zugriff auf einen Satz gemeinsamer Funktionen (514) an die erste Anwenderinhaltanfrage (510) und die zweite Anwenderinhaltanfrage (512);
wobei das Verfahren ferner durch Folgendes gekennzeichnet ist:
Austauschen (408) von Zustandsinformationen (516) zwischen der ersten Visualisierung (332) und der zweiten Visualisierung (334).

2. Verfahren nach Anspruch 1, wobei eine ausgewählte des Satzes gemeinsamer Funktionen (514) die Größenbestimmung graphischer Anzeigesymbole umfasst.

3. Verfahren nach Anspruch 2, wobei die ausgewählte des Satzes gemeinsamer Funktionen (514) ferner das Platzieren der graphischen Anzeigesymbole in einer Statusleiste umfasst.

4. Verfahren nach einem der Ansprüche 1 bis 3, wobei eine ausgewählte des Satzes gemeinsamer Funktionen (514) sicherheitsbezogene Funktionen umfasst.

5. Verfahren nach einem der vorhergehenden Ansprüche, wobei die ausgewählte des Satzes gemeinsamer Funktionen (514) das Anmelden an einem Server umfasst.

6. Verfahren nach einem der vorhergehenden Ansprüche, wobei die Zustandsinformationen (516) dynamische Informationen in Bezug auf ein Objekt oder Asset umfassen.

7. Verfahren nach einem der vorhergehenden Ansprüche, wobei die erste Visualisierung (332) eine Webseite umfasst.

8. Vorrichtung zum Verknüpfen von Anwenderinhalt mit Aktionen, wobei die Vorrichtung Folgendes umfasst:
eine Schnittstelle (502) mit einem Eingang (506) und einem Ausgang (508), wobei die Schnittstelle (502) konfiguriert ist zum Empfangen, an dem Eingang, einer ersten Anwenderinhaltanfrage (510) von einer ersten Visualisierung (332) und einer zweiten Anwenderinhaltanfrage (512) von einer zweiten Visualisierung (334);
einen Controller (504), wobei der Controller (504) mit der Schnittstelle (502) gekoppelt ist, wobei der Controller (504) konfiguriert ist zum Analysieren der ersten Anwenderinhaltanfrage (510) und der zweiten Anwenderinhaltanfrage (512), wobei der Controller (504) ferner, basierend auf dem Analysieren, konfiguriert ist zum Bereitstellen von Zugriff auf einen Satz gemeinsamer Funktionen (514) an die erste Anwenderinhaltanfrage (510) und die zweite Anwenderinhaltanfrage (512),
wobei die Vorrichtung ferner durch Folgendes gekennzeichnet ist:
der Controller (504) ist konfiguriert zum Austauschen von Zustandsinformationen (516) zwischen der ersten Visualisierung (332) und der zweiten Visualisierung (334) an dem Ausgang (508).

9. Vorrichtung nach Anspruch 8, wobei eine ausgewählte des Satzes gemeinsamer Funktionen (514) die Größenbestimmung graphischer Anzeigesymbole umfasst.

10. Vorrichtung nach Anspruch 9, wobei die ausgewählte des Satzes gemeinsamer Funktionen (514) ferner das Platzieren der graphischen Anzeigesymbole in einer Statusleiste umfasst.

11. Vorrichtung nach einem der Ansprüche 8 bis 10, wobei eine ausgewählte des Satzes gemeinsamer Funktionen (514) sicherheitsbezogene Funktionen umfasst.

12. Vorrichtung nach einem der Ansprüche 8 bis 11, wobei die ausgewählte des Satzes gemeinsamer Funktionen (514) das Anmelden an einem Server über den Ausgang umfasst.

13. Vorrichtung nach einem der Ansprüche 8 bis 12, wobei die Zustandsinformationen (516) dynamische Informationen in Bezug auf ein Objekt oder Asset umfassen.

14. Vorrichtung nach einem der Ansprüche 8 bis 13, wobei die erste Visualisierung (332) eine Webseite umfasst.

## Revendications

1. Procédé (400) pour établir une interface entre un contenu utilisateur et des actions, le procédé comprenant :
la réception (402) d'une première demande de contenu utilisateur (510) d'une première visualisation (332) et d'une seconde demande de contenu utilisateur (512) d'une seconde visualisation (334) ;
l'analyse (404) de la première demande de contenu utilisateur (510) et de la seconde demande de contenu utilisateur (512) ;
sur la base de l'analyse, la fourniture (406) d'un accès à un jeu de fonctions communes (514) à la première demande de contenu utilisateur (510) et à la seconde demande de contenu utilisateur (512) ;
le procédé étant en outre **caractérisé par** :
le partage (408) d'informations d'état (516) entre la première visualisation (332) et la seconde visualisation (334).

2. Procédé selon la revendication 1, dans lequel l'une choisie parmi le jeu de fonctions communes (514) comprend le calibrage d'icônes d'affichage graphique.

3. Procédé selon la revendication 2, dans lequel l'une choisie du jeu de fonctions communes (514) comprend en outre le placement des icônes d'affichage graphique sur une barre d'état.

4. Procédé selon l'une quelconque des revendications 1 à 3, dans lequel l'une choisie du jeu de fonctions communes (514) comprend des fonctions se rapportant à la sécurité.

5. Procédé selon l'une quelconque des revendications précédentes, dans lequel l'une choisie du jeu de fonctions communes (514) comprend l'enregistrement sur un serveur.

6. Procédé selon l'une quelconque des revendications précédentes, dans lequel les informations d'état (516) comprennent des informations dynamiques se rapportant à un objet ou à un actif.

7. Procédé selon l'une quelconque des revendications précédentes, dans lequel la première visualisation (332) comprend une page web.

8. Appareil pour établir une interface entre un contenu utilisateur et des actions, l'appareil comprenant :
une interface (502) ayant une entrée (506) et une sortie (508), l'interface (502) étant configurée pour recevoir à l'entrée une première demande de contenu utilisateur (510) d'une première visualisation (332) et une seconde demande de contenu utilisateur (512) d'une seconde visualisation (334) ;
un régulateur (504), le régulateur (504) étant couplé à l'interface (502), le régulateur (504) étant configuré pour analyser la première demande de contenu utilisateur (510) et la seconde demande de contenu utilisateur (512), le régulateur (504) étant en outre configuré pour, sur la base de l'analyse, fournir un accès à un jeu de fonctions communes (514) à la première demande de contenu utilisateur (510) et à la seconde demande de contenu utilisateur (512), l'appareil étant **caractérisé en outre par** le régulateur (504) qui est configuré pour partager des informations d'état (516) entre la première visualisation (332) et la seconde visualisation (334) à la sortie (508).

9. Appareil selon la revendication 8, dans lequel l'une choisie parmi le jeu de fonctions communes (514) comprend le calibrage d'icônes d'affichage graphique.

10. Appareil selon la revendication 9, dans lequel l'une choisie du jeu de fonctions communes (514) comprend en outre le placement des icônes d'affichage graphique sur une barre d'état.

11. Appareil selon l'une quelconque des revendications 8 à 10, dans lequel l'une choisie du jeu de fonctions communes (514) comprend des fonctions se rapportant à la sécurité.

12. Appareil selon l'une quelconque des revendications 8 à 11, dans lequel l'une choisie du jeu de fonctions communes (514) comprend l'enregistrement sur un serveur via la sortie.

13. Appareil selon l'une quelconque des revendications 8 à 12, dans lequel les informations d'état (516) comprennent des informations dynamiques se rapportant à un objet ou à un actif.

14. Appareil selon l'une quelconque des revendications 8 à 13, dans lequel la première visualisation (332) comprend une page web.
